# EUROPÄISCHE PATENTSCHRIFT

(11) **EP 0 656 175 B1**
(45) Veröffentlichungstag und Bekanntmachung des Hinweises auf die Patenterteilung: **07.04.1999**
(21) Anmeldenummer: 94118599.3
(22) Anmeldetag: 25.11.1994
(51) Int. Cl.: A22C 11/02

(54) **Kalibriervorrichtung für Würste**
Device for calibrate sausages
Dispositif de calibrage pour saucisses

(30) Priorität: 01.12.1993 DE 4340987; 29.03.1994 DE 4410925
(43) Veröffentlichungstag der Anmeldung: 07.06.1995
(73) Patentinhaber: Logistik Transfer Lippe Gesellschaft zur Automatisierung logistischer Systeme mbH, D-32657 Lemgo (DE)
(72) Erfinder:
(74) Vertreter: Fritz, Edmund Lothar, Dipl.-Chem.

(56) Entgegenhaltungen:
- EP-A- 0 071 024
- EP-A- 0 075 106
- EP-A- 0 476 258
- CH-A- 524 314
- DE-A- 1 925 733
- DE-A- 2 605 745
- FR-A- 2 214 413
- US-A- 3 148 408

## Beschreibung

Die Erfindung betrifft eine Kalibriervorrichtung für Würste nach dem Oberbegriff des Patentanspruchs 1.

Das älteste Verpackungsverfahren von Fleisch- und Wurstwaren ist der Naturdarm. Er wird aus Teilen des Verdauungstrakts sowie aus den Harnblasen von Schlachtvieh hergestellt und überwiegend für Brüh- oder Bratwurst und Rohwurst verwendet.

Därme, die als Wursthüllen dienen, werden auf ein Brätabgabe- und -drehrohr gezogen und dann mit Brät gefüllt. Jedesmal, wenn das Brät volumenportioniert in den Darm gedrückt wird, wird letzterer mit einer gewissen Kraft vom Rohr abgeschoben, und bei Abgabe der vollen Portion wird das Rohr verdreht, wodurch das Wurstende festgelegt wird.

Da einerseits der Durchmesser des Darms von Natur aus ungleichförmig und andererseits die Nachgiebigkeit des Darmes gegenüber dem eingepreßten Brät unterschiedlich ist, fallen die Würste in Länge und Querschnittskontur unterschiedlich aus.

Da es aus verschiedenen Gründen wünschenswert ist, die Form der Wurst zu kalibrieren, d.h. vergleichmäßigen zu können, ist diese schon in Streifen geschnitten worden, um Ausbeulungen zu begradigen. Dieses Verfahren ist jedoch sehr lohnintensiv.

Um die Deformation der Wurstenden beim Abteilen durch Verdrehen gering zu halten, wird in EP-A-476 258 vorgeschlagen, die vorausgehende Portion beim Abtrennen mittels eines Förderbandes mit einer relativ zur Ausstoßgeschwindigkeit des Wurstbräts höheren Geschwindigkeit von der Austrittsöffnung weg zu führen. Auf diese Weise wird der Füllungsgrad im Bereich der Verdreh- und damit Abtrennstelle gering gehalten, wodurch die beim Verdrehen zu verdrängende Brätmasse ebenfalls gering ist.

Ein anderes Verfahren besteht darin, die Wurst in ein Netz zu pressen, wodurch ein gleichmäßiger Durchmesser erzielbar ist. Dieses Verfahren hat den Nachteil, daß die besondere Struktur und Farbe des Naturdarms nicht mehr sichtbar ist.

Der Erfindung liegt die Aufgabe zugrunde, eine Vorrichtung zum Kalibrieren von Würsten mit einem Naturdarm anzugeben, die kostengünstig und effektiv arbeitet.

Die Aufgabe wird mit den kennzeichnenden Merkmalen des Patentanspruchs 1 gelöst, nämlich dadurch, daß die Transportvorrichtung den Umfang des Darms festlegende Form- und Führungsglieder enthält, die von mehreren Endlosbändern in Gegenüberstellung gehalten und geführt sind, und daß die Transportvorrichtung so ausgebildet ist, daß ein Wegführen des Darms beim Austritt der Brätportion von der Austrittsöffnung im wesentlichen um eine der Volumenportion proportionale und der von den Form- und Führungsgliedern festgelegten Querschnittsfläche reziprok proportionale Strecke ermöglicht wird.

Damit wird die Möglichkeit eröffnet, die Füllung des Darms druckfrei oder sogar mit geringfügigem Unterdruck (sog. Unterspritzung) ausführen. Damit verbunden ist der Vorteil, daß Ausbeulungen des Darms zu einem annähernd gleichen Durchmesser zurückgenommen werden können, so daß die Erfindung im Ergebnis Würste gleicher Abmessungen wirtschaftlich herzustellen gestattet.

Aufgrund beseitigten Überdrucks wird das Platzen der Wurst sowohl herstellungsseitig als auch anwenderseitig beim Erwärmen durch Kochen oder Braten vermieden bzw. reduziert.

Eine besondere Ausgestaltung der Kalibriervorrichtung nach der Erfindung sieht vor, daß die Form- und Führungsglieder von mehreren Endlosbändern in Gegenüberstellung gehalten und geführt sind.

Dadurch ist es möglich, Würste mit unterschiedlicher Querschnittsform (Kontur) herzustellen.

Weitere vorteilhafte Ausgestaltungen können den restlichen Unteransprüchen entnommen werden.

In der Zeichnung ist ein Ausführungsbeispiel der erfindungsgemäßen Kalibriermaschine schematisch dargestellt, und zwar zeigt
- Fig. 1: eine schematische Seitenansicht der erfindungsgemäßen Kalibriermaschine mit Untergestell,
- Fig. 2: die erfindungsgemäße Kalibriermaschine im Längsschnitt,
- Fig. 3: einen Schnitt nach Linie III-III aus Fig. 2,
- Fig. 4: eine Einzelheit III der Umlenkwalze aus Fig. 2,
- Fig. 5: einen Ausschnitt des Obertrums des oberen Endlosbandes aus Fig. 2 als Detailzeichnung,
- Fig. 6: einen Schnitt nach Linie VI-VI aus Fig. 5,
- Fig. 7: eine Detailansicht des oberern Abstreifers,
- Fig. 8: eine Detailansicht des Abgabeendes des Brätabgaberohres,
- Fig. 9: eine Detailansicht der Befestigung eines Kalibrierförmchens, angeordnet am Obertrum des oberens Bandes nach einem ersten Ausführungsbeispiel und
- Fig. 10: eine Detailansicht der Befestigung eines Kalibrierförmchens, angeorndet am Obertrum des oberens Bandes nach einem zweiten Ausführungsbeispiel.

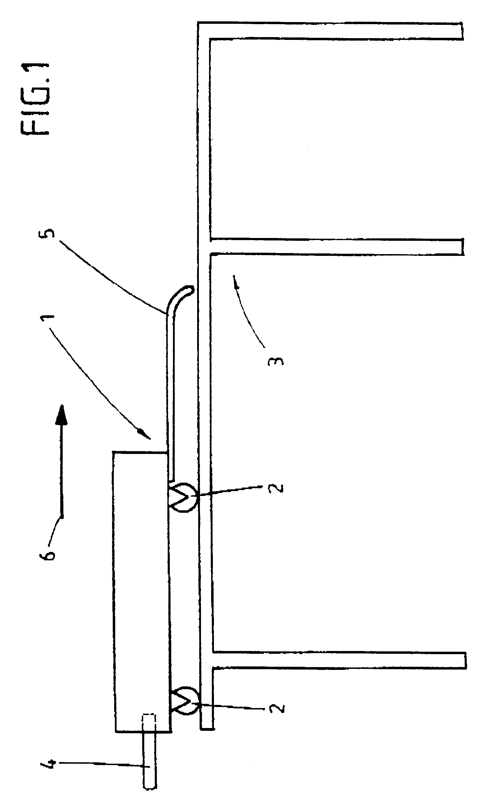

Wie aus Fig. 1 ersichtlich, ist die erfindungsgemäße Kalibriervorrichtung (1) im hier vorliegenden Ausführungsbeispiel über Rollkörper (2) auf einem Untergestell (3) verfahrbar angeordnet, wobei das Brätabgaberohr (4) in die Kalibriervorrichtung (1) hineinragt.

Die Kalibriervorrichtung (1) ist an dem dem Brätabgaberohr (4) abgewandten Ende mit einem Wurstauffangblech (5) versehen, das bei einer Verlagerung der Kalibriervorrichtung (1) in Pfeilrichtung (6) und einer anschließenden Verlagerung der Vorrichtung (1) in die in Fig. 1 dargestellten Ausgangsposition jeweils mit der Vorrichtung (1) gemeinsam verfahrbar angeordnet ist.

Die Größe des Wurstauffangbleches (5) ist dabei derart gewählt, daß, wenn die Vorrichtung (1) von der in Fig. 1 dargestellten mit dem Brätabgaberohr (4) in Eingriff befindlichen Position in eine hier nicht dargestellte rückwärtige Position in Pfeilrichtung (6) verfährt, daß das der Vorrichtung (1) abgewandte Ende des Wurstauffangbleches (5) das ihm zugewandte Ende des Untergestelles (3) nicht überfährt, so daß keine Gefahr besteht, hinter dem Untergestell (3) stehende Personen durch Zurückfahren der Vorrichtung (1) und des mit ihr verbundenen Wurstauffangbleches (5) zu verletzen.

Bei einem weiteren Ausführungsbeispiel ist es jedoch ebenso denkbar, das Wurstauffangblech (5) teleskopartig auszugestalten, so daß das in Fig. 1 dargestellte Ende des Wurstauffangbleches (5) stets in der dort dargestellten Position verbleibt und das Blech (5) teleskopartig ineinander verfahrbar ausgestaltet ist oder aber in eine Position unterhalb der Vorrichtung (1) verschoben wird.

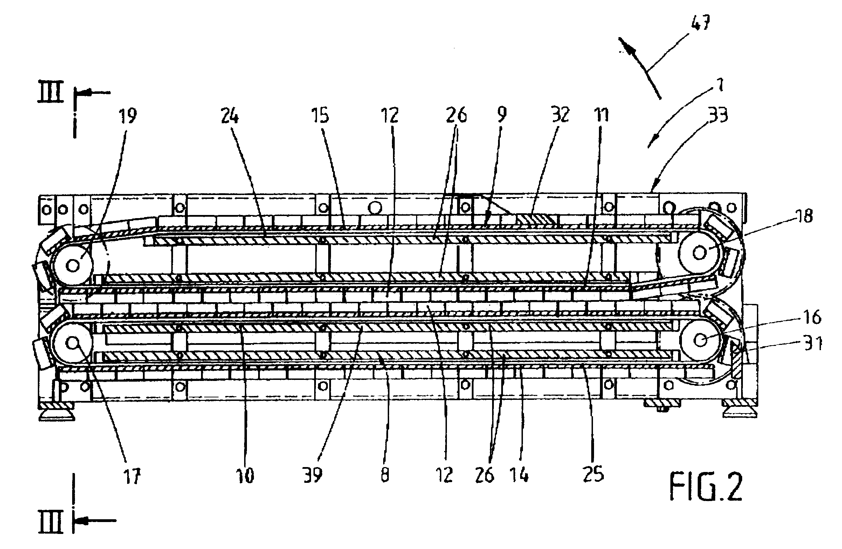

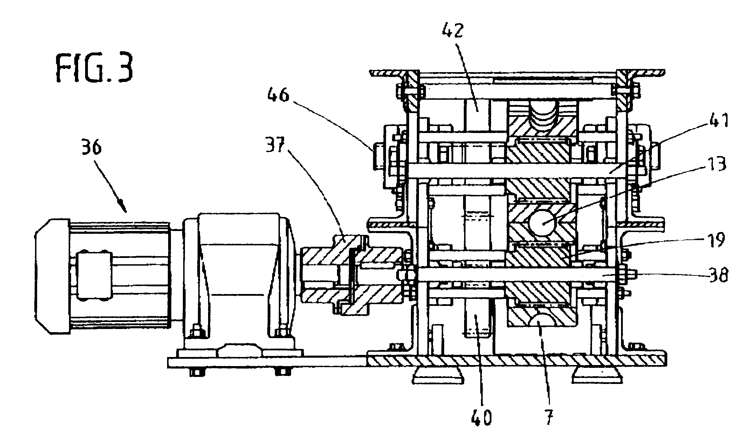

Wie in Fig. 2 dargestellt, besteht die Kalibriervorrichtung (1) im wesentlichen aus einem oberen und unteren Endlosband (8,9), wobei das Obertrum (10) des unteren (8) und das Untertrum (11) des oberen Bandes (9) derart angeordnet ist, daß die auf den Bändern (8,9) angeordneten, jeweils eine halbkreisförmige Ausbuchtung (7), dargestellt in Fig. 3, aufweisendes Kalibrierförmchen (12) gegeneinanderliegend geführt werden, so daß sich im Bereich des mit den Kalibrierförmchen (12) gegeneinanderliegend angeordneten Obertrums (10) des unteren Endlosbandes (8) und des Untertrums (11) des oberen Endlosbandes (9) eine röhrenförmige Mitnahme (13), ebenfalls dargestellt in Fig. 3, bildet.

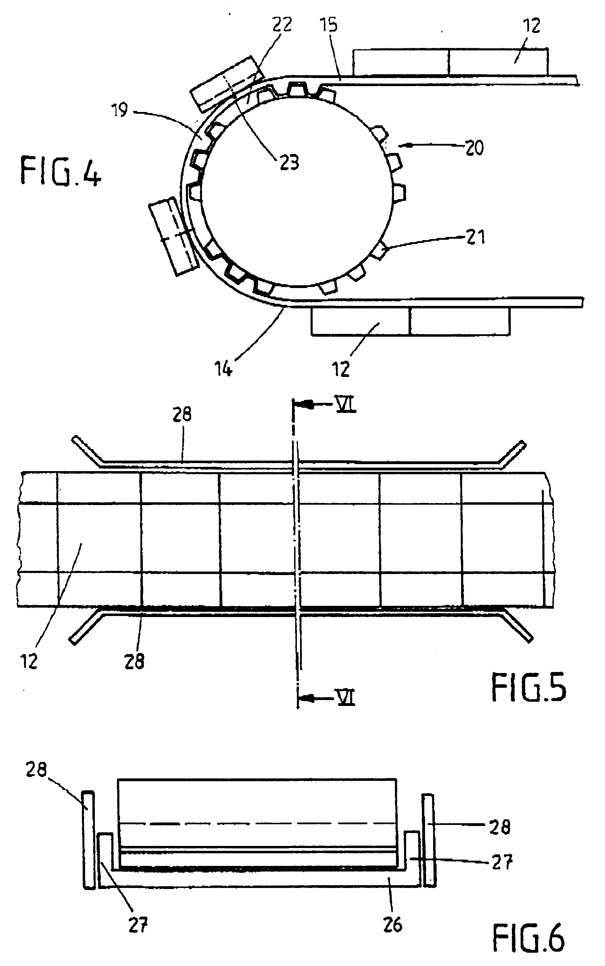

Das obere und untere Endlosband (8,9) besteht im hier vorliegenden Ausführungsbeispiel jeweils aus einem Zahnriemen (14,15), dargestellt in Fig. 2 und 4, auf die die einzelnen Kalibrierförmchen (12), wie aus Fig. 2,4, 9 und 10 ersichtlich, festgelegt sind.

Die als Endlosband ausgebildeten Zahnriemen (14,15) werden an ihren Wendepunkten (16,17) durch als Zahnscheiben ausgebildete Umlenkwalzen (18,19) gespannt und geführt.

Wie aus Fig. 4 ersichtlich, weisen die einzelnen Zahnscheiben (18,19) im Abstand zueinander angeordnete fünf Gruppen (20) von jeweils drei trapezförmig ausgestalteten Zähnen (21) auf. Die Gruppen (20) sind in gleichen Abständen zueinander auf der Umfangfläche der Zahnscheiben (18,19) angeordnet.

Zwischen den einzelnen Gruppen (20) sind dadurch Zahnlücken (22) geschaffen, die der Aufnahme bzw. einen Freiraum für die Kalibrierförmchenbefestigung (23) (siehe Fig. 4 und/oder 9) bilden, so daß es bei Wirkungseingriff von Zahnriemen (14,15) und Zahnscheibe (18,19) zu keinen durch die Kalibrierförmchenbefestigung (23) hervorgerufenen Problemen kommt.

Der in Blickrichtung Fig. 2 linke Endbereich des Obertrums (24) des oberen Endlosbandes (9) verläuft leicht abfallend auf die Zahnscheibe (19) zu, während das rechte Ende des Untertrums (11) des oberen Endlosbandes (9) leicht ansteigend auf die in Blickrichtung Fig. 2 rechte Zahnscheibe (18) zuläuft.

Das Obertrum (24) des oberen Endlosbandes (9) und das Untertrum (11) des oberen Endlosbandes (9) wird jeweils im Bereich zwischen Zahnscheibe (18,19) und schrägem Verlauf des Trums (11,24) ebenso wie das Ober- und Untertrum (10,25) des unteren Endlosbandes (8), wie aus Fig. 2,5 und 6 zu ersehen, durch eine im hier vorliegenden Ausführungsbeispiel aus Kunststoff gefertigte U-förmige Führung (26) geführt, wobei an den Flanschen (27) der U-förmigen Führung (26) jeweils noch sog. Leitbleche (28) angeordnet sind, die, wie aus Fig. 5 zu ersehen, an ihren Enden auswärtsweisend gekrümmt sind.

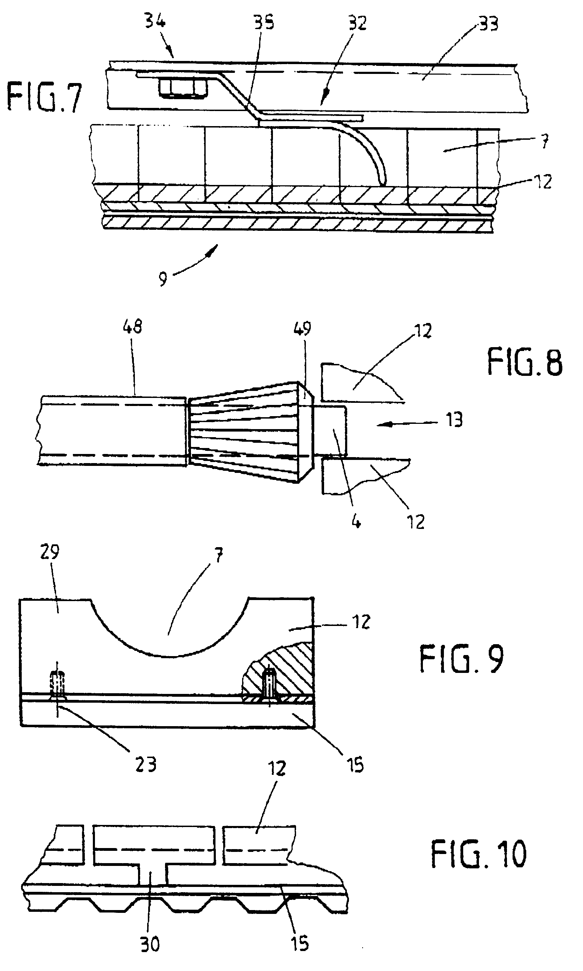

Die einzelnen Kalibrierförmchen (12) sind im hier vorliegenden Ausführungsbeispiel entsprechend Fig. 9 über Senkschrauben (23) mit den Zahnriemen (14,15) befestigt.

Wie aus Fig. 9 des weiteren zu ersehen, weisen die hier aus Kunststoff gefertigten Kalibrierförmchen (12) eine halbkreisförmige Ausbuchtung (7) auf, die mit den komplementär dazu ausgestalteten jeweils eine halbkreisförmige Ausbuchtung (7) der gegenüberliegenden Kalibrierförmchen (12), die in Wirkungseingriff gelangen, so daß sie jeweils einen Abschnitt der röhrenförmigen Mitnahme (13) bilden.

Die Kalibrierförmchen (12) weisen darüber hinaus zwei die halbkreisförmigen Ausbuchtung (7) umrahmende Kontaktflächen (29) auf, die, wie aus Fig. 2 zu ersehen, mit den Kontaktflächen (29) der gegenüberliegend angeordneten Kalibrierförmchen (12) in Wirkungseingriff gelangen, wobei die Endlosbänder (8,9) derart auf den Zahnscheiben (18,19) angeordnet sind, daß die Kalibrierförmchen (12) in einer versetzt zueinander angeordneten Position stehen, um beim Umlenken nicht zu kollidieren, wobei die durch zwei nebeneinander angeordnete Kalibrierförmchen (12) entstehende Fuge durch ein gegenüberliegend angeorndetes Kalibrierförmchen (12) im Bereich des benachbart zueinander laufenden Ober- und Untertrums (10,11) der beiden Endlosbänder (8,9) abgedeckt ist.

In Fig. 10 ist eine weitere Möglichkeit aufgezeigt, die erfindungsgemäßen Kalibrierförmchen (12) auf den Zahnriemen (14,15) anzuordnen, wobei hier die Kalibrierförmchen (12) einen Steg (30) aufweisen, der dann durch z. B. Verschweißen oder Kleben mit dem Zahnriemen (14,15) verbunden werden kann.

Darüber hinaus weist die erfindungsgemäße Kalibriervorrichtung (1) im Bereich des Obertrums (24) des oberen Endlosbandes (9) sowie im Bereich des Untertrums (25) des unteren Endlosbandes (8) jeweils eine Abstreifeinrichtung (31,32) auf (siehe Fig. 2), die am Rahmengestell (33) der Vorrichtung (1) befestigt sind und in den halbkreisförmig ausgestalteten Teil (7) der Kalibrierförmchen (12), wie in Fig. 7 dargestellt, eingreift, so daß etwaige zurückbleibende z. B. Lebensmittelreste aus den Kalibrierförmchen (12) entfernt werden.

Die Abstreifeinrichtung (31,32) weist im hier vorliegenden Ausführungsbeispiel eine Halteeinrichtung (34), d. h. ein Halteblech (35) sowie einen in die halbkreisförmige Ausbuchtung (7) eingreifenden Abstreifer auf.

Die Vorrichtung (1) wird, wie aus Fig. 3 zu ersehen, über einen Elektromotor (36) angetrieben, wobei der Elektormotor (36) mittels einer Klauenkupplung (37) mit einer Antriebswelle (38) gekoppelt ist.

Auf der antriebswelle (38) ist die in Blickrichtung Fig. 2 untere am Wendepunkt (17) des unteren Endlosbandes (8) angeordnete Zahnscheibe (19) drehfest angeordnet, so daß es bei einer entsprechenden Drehbewegung der Antriebswelle (38) zu einer Bewegung des unteren Endlosbandes (8) in Pfeilrichtung (39) kommt.

Wie aus Fig. 3 desweiteren zu ersehen, ist auf der Antriebswelle (38) darüber hinaus ein Stirnzahnrad (40) drehfest festgelegt, das wiederum in direktem Wirkungseingriff mit einem, auf der in Blickrichtung Fig. 3 oberen Antriebswelle (41), ebenfalls drehfest angeordneten Stirnzahnrad (42) in Wirkungseingriff steht, so daß die auf der oberen Antriebswelle (41) im Umlenkpunkt (17) angeordnete Zahnscheibe (18) und damit das obere Endlosband (9) mit seinem Untertrum (11) ebenfalls zu einer Bewegung in Pfeilrichtung (39) veranlaßt wird.

Durch die bereits beschriebene Führung des oberen und unteren Endlosbandes (8,9), insbesondere des Untertrums (11) des oberen Endlosbandes (9) und des Obertrums (10) des unteren Endlosbandes (8) wird der bereits ebenfalls beschriebene und in Fig. 3 dargestellte röhrenförmige Kalibriertunnel (13) geschaffen, dessen einzelne Segmente jeweils auf die in Blickrichtung Fig. 2 linken Umlenkpunkte (17) zulaufen, um dann an den Umlenkpunkten (16) erneut zu einer röhrenförmigen Mitnahme (13) zusammengefaßt zu werden.

Im hier dargestellten Ausführungsbeispiel besteht das Rahmengestell (33) aus einem unteren (44) und einem oberen (45) Teil, der um eine endständig, d.h. im Bereich der Antriebswellen (38, 40) angeordnete Schwenkachse (46) in Pfeilrichtung (47), dargestellt in Fig. 2, verschwenkt werden kann.

In einem bevorzugten Ausführungsbeispiel wird das Rahmengestell (33) jedoch nicht zwingend zweiteilig ausgestaltet, vielmehr werden die Zahnriemen auf sog. Achsstummeln angeordnet und mit Schnellveschlüssen festgelegt, so daß die Endlosbänder (8,9) durch Lösen dieser Schnellverschlüsse auf einfache und schnelle Weise ausgetauscht werden können, ohne daß hierzu Teile des Rahmens (33) verschwenkt werden müßten.

Der Elektromotor (36) kann über einen Frequenzumrichter derart angesteuert werden, daß die Laufgeschwindigkeit der Endlosbänder (8,9) abhängig von der Steuerung einer hier nicht dargestellten Füllmaschine, d. h. der Geschwindigkeit der Füllmaschine, anzufahren ist, so daß eine benötigte bzw. gewollte Übergeschwindigkeit der Vorrichtung (1) zur Geschwindigkeit der Füllmaschine definiert und diese konstant gehalten werden kann.

In der Benutzung wird die erfindungsgemäße Kalibriervorrichtung (1) derart vor einer üblichen Darmfüllmaschine zwangspositioniert, daß das Abgabeende des Brätabfüllrohres (4) an den Endlosbandumkehrpunkten (16) in den Bereich der rohrförmigen Mitnahme (13) hineinragt (siehe Fig. 1 und 2).

Vor Inbetriebnahme wird zunächst einmal in üblicher Weise der zu füllende Darm (48) auf dem Brätabgaberohr (4) positioniert und sodann über die Füllmaschine mit Brät gefüllt.

Die Endlosbänder (8,9) und damit die rohrförmige Mitnahme (13) dienen der Aufnahme der zu füllenden Därme (48), wobei sich die rohrförmige Mitnahme (13) in Pfeilrichtung (39) bewegt und in ihrer Geschwingkeit über der Brätabgabegeschwindigkeit des Brätabgaberohres (4) liegt, so daß es, hervorgerufen durch die Abzugsgeschwindigkeit des Darmes, zu einer vorzubestimmenden leichten Zugbewegung des Darmes kommt, so daß der Darm praktisch drucklos z. B. mit Brät gefüllt wird.

Durch die Füllung des Darms (48) mit Brät kommt es zu einer Art Klemmwirkung des gefüllten Darms (48) in der rohrförmigen Mitnahme (13) und damit zu einer Zugbewegung des Darms durch Reibschluß.

Die Mitnahme gibt dem mit Brät gefüllten Darm darüber hinaus die notwendige und gewünschte Form.

Der Außendurchmesser der entstehenden Würste wird dabei durch den Innendurchmesser der rohrförmigen Mitnahme (13) vorgegeben, so daß entsprechend des Darmes (48) die notwendigen Kalibrierförmchen (12) verwandt werden und es zu einer Vergleichmäßigung des Durchmessers und damit der Länge der einzelnen Würste kommt.

Ist über die Füllmaschine eine bestimmte vorgegebene Brätmenge abgegeben worden, so wird der Brätausstoß gestoppt, gleichzeitig wird die erfindungsgemäße Kalibriervorrichtung (1), d. h. der Vorlauf der Endlosbänder (8,9) gestoppt, wobei die in der röhrenförmigen Mitnahme (13) befindlichen Würste dort an der Innenfläche des entstandenen Tunnels (13) unter einem gewissen Druck anliegen,d. h. eine gewisse Klemmwirkung entsteht, so daß die Enden der zu bildenden Würste durch übliches Drehen des Brätabgaberohres (4) zugedreht werden können.

Am dem Brätabgaberohr (4) entgegengesetzten Ende verlassen die so geformten Würste die erfindungsgemäße Kalibriervorrichtung (1) und werden im hier vorliegenden Ausführungsbeispiel durch das Wurstauffangblech (5) aufgenommen und können dann der weiteren Verarbeitung zugeführt werden.

Es ist jedoch ebenso denkbar, daß statt des Wurstauffangbleches (5) eine anders geartete Aufnahme vorhanden ist, wie z. B. ein Förderband oder ähnliches.

Die erfindungsgemäße Vorrichtung (1) ist dabei derart verfahrbar ausgestaltet, daß sie in eine vorbestimmte genau definierte rückwärtige, d. h. Ruheposition zu verfahren ist oder aber in eine in Fig. 1 dargestellte vordere mit dem Brätabgaberohr (4) in Eingriff befindliche Arbeitsposition, die ebenfalls in ihrem Abstand zur Füllmaschine exakt definiert ist, d. h. den stets gleichen Abstand zur Füllmaschine aufweist.

Im hier vorliegenden Ausführungsbeispiel weisen die Kalibrierförmchen (12) eine halbkreisförmige Einbuchtung (7) auf, so daß ein insgesamt kreisrunder Tunnel bzw. eine röhrenförmige Mitnahme (13) entsteht.

Es ist jedoch auch denkbar, anders geformte Einbuchtungen (7) vorzusehen oder aber mehrere Bänder derart anzuordnen, so daß die Mitnahme (13) durch mehr als zwei Kalibrierförmchen (12) gebildet wird.

Indem eine Vielzahl von segmentierten Kalibrierförmchen (12) vorgesehen wird, gekoppelt mit der Einstellmöglichkeit der Positionierung dieser untereinander, können weitgehend beliebige Kalibrierstärken realisiert werden, auch mit von dem kreisrunden Querschnitt abweichender Kontur.

In jedem Fall läßt sich der Durchmesser, insbesondere von Naturdärmen, mit der Kalibrievorrichtung (1) nach der vorliegenden Erfindung vergleichmäßigen.

Die Förderbewegung der Wurst während des Füllvorganges wird durch die am Untertrum (11) des oberen Bandes (9) und Obertrum (10) des unteren Bandes (8) angeordneten und in Eingriff gelangenden Kalibrierförmchen (12) gebildete röhrenförmige Mitnahme (13) verursacht, d. h., auf die mit Brät gefüllten Würste wird eine Zugbewegung ausgeübt, so daß der Abzug des Darmes (48) vom Brätabgaberphr (4) nicht durch den Fülldruck im Darm bestimmt wird.

Es wird hier einem konstanten Brätvolumen eine konstante Länge an Darm (48) zur Verfügung gestellt, wobei durch die gleichzeitige Durchmesserbegrenzung sich dann eine konstante Länge der Wurst ergibt und bei gleichbleibender Abzugsgeschwindigkeit alle mit der erfindungsgemäßen Vorrichtung (1) kalibrierten Würste die gleiche Darmlänge, gleiche Form und gleichen Füllgrad erhalten.

Darüber hinaus kann durch die ansteuerbare Abzugsgeschwindigkeit, d.h. durch die ansteuerbare Laufgeschwindigkeit des oberen und unteren Endlosbandes (8,9) der Fülldruck des Darmes (48) reguliert werden. Es ist möglich, den Darm (48) praktisch drucklos zu füllen u. a. auch zu unterspritzen.

Der im hier vorliegenden Ausführungsbeispiel röhrenförmige Tunnel (13), der durch die auf den beiden gegenläufigen Zahnriemen (14,15) befindlichen Kalibrierförmchen (12) gebildet wird, kann in seiner Länge variabel gestaltet werden, d.h. es ist in einem weiteren Ausführungsbeispiel vorgesehen, die Umkehrpunkte (16,17) in ihrer horizontalen Lage veränderbar auszugestalten.

Die Querschnittform des Tunnels wird durch die Kalibrierförmchen (12) vorgegeben.

Wie bereits dargelegt, wird das Abdrehen des Darmens (48) durch eine Drehbewegung des Brätabgaberohres (4) und gleichzeitiges Klemmen des bereits gefüllten Darmes (48) in der röhrenförmigen Mitnahme (13) erreicht, da der bereits in der röhrenförmigen Mitnahme (13) befindliche gefüllte Darm (48) hier unter leichter Pressung angeordnet ist.

Die Laufgeschwindigkeit der Endlosbänder (8,9) ist auf die durch die Füllmaschine vorgegebene Füllgeschwindigkeit der Därme (48) eingestellt, wobei entsprechende Differenzen frei wählbar sind.

Darüber hinaus ist, wie in Fig. 8 dargestellt, das Brätabgaberohr (4) mit einer Verdickung (49) versehen, die den auf der den Kalibrierförmchen (12,13) abgewandten Seite der Verdickung (49) angeordneten gerafften Darm (48) aus dem Einzugsbereich der Kalibrierstrecke, d. h. der rohrförmigen Mitnahme (13), heraushält und einen gleichmäßigen Abzug des Darmes (48) gewährleistet.

Im hier vorliegenden Ausführungsbeispiel ragt das Brätabgaberohr (4) in die geschlossene Kalibrierstrecke, d.h. in die rohrförmige Mitnahme (13) hinein.

Zum Einlegen der Wurst bzw. des zu füllenden Darmes (48) kann, wie bereits ebenfalls beschrieben, die Vorrichtung (1) in eine rückwärtige Position verfahren werden und/oder nach einem weiteren Ausführungsbeispiel um eine Schwenkachse (46) aufgeklappt werden.

Diese Schwenkachse (46) kann jedoch auch längs der Vorrichtung angeordnet sein, so daß der obere Teil (45) des Rahmengestelles (33) um eine längs der Vorrichtung (1) verlaufende Achse verschwenkt werden kann.

## Patentansprüche

1. Kalibriervorrichtung für Würste, deren Brät volumenportioniert aus einem Brätabgabe- und -drehrohr (4) zur Füllung eines über das Brätabgabe- und -drehrohr (4) gezogenen Darms (48) ausgegeben wird, um nach Abgabe einer Volumenportion eine umfangsseitige Drehung auszuführen, bei der Wurstenden festgelegt werden, mit einer Transportvorrichtung zum Erfassen und Vorwärtsbewegen einer Portion, dadurch gekennzeichnet, daß die Transportvorrichtung den Umfang des Darms (48) festlegende Form- und Führungsglieder (12) enthält, die von mehreren Endlosbändern (8, 9) in Gegenüberstellung gehalten und geführt sind, und daß die Transportvorrichtung so ausgebildet ist, daß ein Wegführen des Darms beim Austritt der Brätportion von der Austrittsöffnung im wesentlichen um eine der Volumenportion proportionale und der von den Form- und Führungsgliedern (12) festgelegten Querschnittsfläche reziprok proportionale Strecke ermöglicht wird.

2. Vorrichtung nach Anspruch 1, dadurch gekennzeichnet, daß die Endlosbänder (8, 9) Zahnriemen (14, 15) sind, die auf ihrer den Form- und Führungsgliedern (12) abgewandten Seite mit von einem Motor (36) angetriebene Zahnscheiben (18, 19) kämmen und von diesen umgelenkt werden.

3. Vorrichtung nach einem der vorstehenden Ansprüche dadurch gekennzeichnet, daß für die Endlosbänder (8, 9) d individuelle Rahmengestellteile (44, 45) mit einem gemeinsamen Schwenkzentrum (46) vorgesehen sind.

4. Vorrichtung nach einem der vorstehenden Ansprüche, gekennzeichnet durch auf einem Untergestell (3) in Verlängerung des Brätabgabe- und -drehrohrs (4) geführte Rollkörper (2).

5. Vorrichtung nach einem der Ansprüche 2 bis 4, dadurch gekennzeichnet, daß die Form- und Führungsglieder (12) auf den Außenseiten der Endlosbänder (8, 9) jeweils durch eine Gegenklemmplatte (23) in einer Zahnlücke auf der Innenseite der Endlosbänder (8, 9) befestigt sind und daß die Zähne (21) der Zahnscheiben (18, 19) in Gruppen (20) geteilt sind, so daß zwischen benachbarten Gruppen (20) eine zahnlose Strecke zur Aufnahme der Gegenklemmplatte (23) gebildet ist.

6. Vorrichtung nach einem der Ansprüche 1 bis 5, gekennzeichnet durch jeweils eine Abstreifeinrichtung (31,32) im Bereich des Außentrums (24, 25) des jeweiligen Endlosbandes (8, 9).

7. Vorrichtung nach einem der Ansprüche 1 bis 6, dadurch gekennzeichnet, daß die Form- und Führungsglieder (12) Kalibrierförmchen sind, die jeweils eine etwa halbkreisförmige Ausbuchtung (7) aufweisen.

8. Vorrichtung nach Anspruch 7, dadurch gekennzeichnet, daß die Kalibrierförmchen (12) auf dem Obertrum (10) des unteren Bandes (8) und auf dem Untertrum (11) des oberen Bandes (9) so angeordnet sind, daß die jeweils halbkreisförmigen Ausbuchtungen (7) zweier Reihen von Kalibrierförmchen (12) gegeneinander liegend geführt werden, so daß sich im Bereich des mit den Kalibrierförmchen (12) gegeneinanderliegend angeordneten Obertrums (10) des unteren Endlosbandes (8) und des Untertrums (11) des oberen Endlosbandes (9) eine röhrenförmige Mitnahme (13) bildet.

9. Vorrichtung nach einem der Ansprüche 7 oder 8, dadurch gekennzeichnet, daß die Kalibrierförmchen (12) die halbkreisförmige Ausbuchtung (7) umrahmende Kontaktflächen (29) aufweisen, die mit den Kontaktflächen (29) der gegenüberliegend angeordneten Kalibrierförmchen (12) in Wirkungseingriff gelangen.

10. Vorrichtung nach einem der Ansprüche 7 bis 9, dadurch gekennzeichnet, daß die Endlosbänder (8, 9) derart auf den Zahnscheiben (18, 19) angeordnet sind, daß die Kalibrierförmchen (12) in einer versetzt zueinander angeordneten Position stehen, wobei die durch zwei nebeneinander angeordnete Kalibrierförmchen (12) entstehende Fuge durch ein gegenüberliegend angeordnetes Kalibrierförmchen (12) abgedeckt ist.

11. Vorrichtung nach einem der Ansprüche 1 bis 10, dadurch gekennzeichnet, daß das Abgabeende des Brätabgaberohrs (4) an den Endlosbandumkehrpunkten (16) in den Bereich der rohrförmigen Mitnahme (13) hineinragt.

12. Vorrichtung nach einem der Ansprüche 1 bis 11, dadurch gekennzeichnet, daß sich die durch die Kalibrierförmchen (12) gebildete rohrförmige Mitnahme (13) von der Austrittsöffnung des Brätabgaberohrs (4) mit einer Geschwindigkeit weg bewegt, die über der Brätabgabegeschwindigkeit des Brätabgaberohres (4) liegt.

13. Vorrichtung nach einem der Ansprüche 1 bis 12, dadurch gekennzeichnet, daß der Innendurchmesser der rohrförmigen Mitnahme (13) so gewählt ist, daß in der rohrförmigen Mitnahme (13) bei Füllung des Darms (48) mit Brät auf den gefüllten Darm (48) eine Klemmwirkung ausgeübt wird.

## Claims

1. Device for calibrating sausages the sausage meat of which is delivered in volume portions from a sausage meat delivery and rotary pipe (4) for filling a skin (48) drawn over the sausage meat delivery and rotary pipe (4) in order to make a revolution in circumferential direction after the supply of a volume portion during which the ends of the sausage are determined, comprising a transportation device for picking up a portion and moving it forwardly, characterised in that the transportation device comprises shaping and guiding elements (12) determining the circumference of the skin (48) which are held and guided in opposite positions by means of several endless strips (8, 9), and that the transportation device is constructed in such a manner that it is possible to lead away the skin during the delivery of the portion of sausage meat from the outlet opening substantially over a distance which is proportional to the volume portion and reciprocally proportional to the cross-sectional area determined by the shaping and guiding elements (12).

2. Device as claimed in claim 1, characterised in that the endless strips (8, 9) are toothed belts (14, 15) which on their sides turned away from the shaping and guiding elements (12) mesh with toothed wheels (18, 19) driven by a motor.

3. Device as claimed in any one of the preceding claims, characterised in that individual frame parts (44, 45) having a common pivoting centre (46) are provided for the endless strips (8, 9).

4. Device as claimed in any one of the preceding claims, characterised by roller members (2) guided on an undercarriage (3) which forms an extension of the sausage meat delivery and rotary pipe (4).

5. Device as claimed in any one of claims 2 to 4, characterised in that the shaping and guiding elements (12) are fastened to the outsides of the endless strips (8, 9) in each case by means of a counter-clamping plate (23) provided in a tooth gap on the inside of the endless strips (8, 9), and that the teeth (21) of the toothed wheels (18, 19) are subdivided in groups (20) in such a manner that between neighbouring groups (20) there is formed a toothless section for receiving the counter-clamping plate (23).

6. Device as claimed in any one of claims 1 to 5, characterised by a stripping apparatus (31, 32) provided in the region of the outer strand (24, 25) of the respective endless strip (8, 9).

7. Device as claimed in any one of claims 1 to 6, characterised in that the shaping and guiding elements (12) are calibrating moulds comprising in each case an approximately semicircular recess (7).

8. Device as claimed in claim 7, characterised in that the calibrating moulds (12) on the upper strand (10) of the lower strip (8) and on the lower strand (11) of the upper strip (9) are arranged in such a manner that the in each case semicircular recesses (7) of two rows of calibrating moulds (12) are guided such that they rest against each other, so that a pipe-shaped engaging piece (13) is formed in the region of the upper strand (10) of the lower endless strip (8) and the lower strand (11) of the upper endless strip (9) with the calibrating moulds (12) resting against each other.

9. Device as claimed in any one of claims 7 or 8, characterised in that the calibrating moulds (12) comprise contact surfaces (29) surrounding the semicircular recess (7), said contact surfaces being in effective engagement with the contact surfaces (29) of the opposed calibrating moulds (12).

10. Device as claimed in any one of claims 7 to 9, characterised in that the endless strips (8, 9) are arranged on the toothed wheels (18, 19) in such a manner that the calibrating moulds (12) are placed in a staggered position, the groove resulting from two calibrating moulds (12) arranged besides each other being covered by a calibrating mould (12) arranged on the opposite side.

11. Device as claimed in any one of claims 1 to 10, characterised in that the delivery end of the sausage meat delivery pipe (4) projects into the region of the pipe-shaped engaging piece (13) at the reversal points (16) of the endless strips.

12. Device as claimed in any one of claims 1 to 11, characterised in that the pipe-shaped engaging piece (13) formed by the calibrating moulds (12) is moving away from the outlet opening of the sausage meat delivery pipe (4) with a velocity exceeding the velocity of the delivery of the sausage meat by means of the sausage meat delivery pipe (4).

13. Device as claimed in any one of claims 1 to 12, characterised in that the inner diameter of the pipe-shaped engaging piece (13) is chosen in such a manner that the filled skin (48) is subject to a clamping action in the pipe-shaped engaging piece (13) during the process of filling the skin (48) with the sausage meat.

## Revendications

1. Dispositif de calibrage pour saucisses, dont la chair est fournie par portions volumétriques déterminées par un tube rotatif d'alimentation de chair (4) pour le remplissage d'un boyau coiffant le tube rotatif d'alimentation de chair (4), lequel après l'alimentation d'une portion volumétrique exécute une rotation périphérique, lors de laquelle les extrémités de la saucisse sont ligaturées, avec un dispositif de transport servant à saisir et à faire avancer une portion, caractérisé en ce que le dispositif de transport comprend des éléments de formage et de guidage (12) communiquant une forme déterminée à la périphérie du boyau, éléments (12) qui sont maintenus et guidés par plusieurs rubans sans fin (8, 9) opposés mutuellement, et en ce que le dispositif de transport est conçu de manière telle que lors de la dispense d'une portion de chair par l'orifice de sortie est rendue possible une distance d'avance en substance proportionnelle à la portion volumétrique et inversement proportionnelle à la surface de la section transversale déterminée par les éléments de formage et de guidage (12).

2. Dispositif suivant la revendication 1, caractérisé en ce que les rubans sans fin (8, 9) sont des courroies crantées (14, 15) qui sur leur face non tournée vers les éléments de foprmage et de guidage (12) engrènent avec des disques dentés (18, 19) entraînés par un moteur (36), lesdits disques leur communiquant un changement de direction.

3. Dispositif suivant l'une quelconque des revendications précédentes, caractérisé en ce que pour les rubans sans fin (8, 9) sont prévus des éléments de bâti individuels (44, 45) avec un centre de pivotement commun (46).

4. Dispositif suivant l'une quelconque des revendications précédentes, caractérisé par des éléments de roulement (2) guidé sur un bâti inférieur (3) dans le prolongement du tube de tube rotatif d'alimentation de chair (4).

5. Dispositif suivant l'une quelconque des revendications de 2 à 4, caractérisé en ce que les éléments de formage et de guidage (12) sur les faces extérieures des rubans sans fin (8, 9) sont chacun fixés par une plaque de serrage antagoniste (23) dans un entredent sur la face intérieure des rubans sans fin (8, 9) et en ce que les dents (21) des disques dentés (18, 19) sont réparties en groupes (20) de telle sorte qu'entre des groupes voisins (20) est formé une longueur exempte de dents pour la réception de la plaque de serrage antagoniste (23).

6. Dispositif suivant l'une quelconque des revendications de 1 à 5, caractérisé par la présence d'un dispositif de raclage (31, 32) dans la région du brin extérieur (24, 25) du ruban sans fin (8, 9) en question.

7. Dispositif suivant l'une quelconque des revendications de 1 à 6, caractérisé en ce que les éléments de formage et de guidage (12) sont des moules de calibrage, qui présentent chacun un bombement (7) sensiblement en forme de demi-cercle.

8. Dispositif suivant la revendication 7, caractérisé en ce que les moules de calibrage (12) sont disposés sur le brin supérieur (10) du ruban inférieur (8) et sur le brin inférieur (11) du ruban supérieur (9) de manière telle que les bombements en forme de demi-cercle (7) de deux rangées de moules de calibrage (12) sont guidées en face l'une de l'autre, de telle sorte que dans la région du brin supérieur (10), avec des moules de calibrage (12) situés en face l'un de l'autre, du ruban sans fin inférieur (8) et du brin inférieur (11) du ruban sans fin supérieur (9) est formé un moyen d'entraînement de forme tubulaire.

9. Dispositif suivant l'une ou l'autre des revendication s 7 et 8, caractérisé en ce que les moules de calibrage (12) présentent des surfaces de contact (29) encadrant le bombement en forme de demi-cercle (7), surfaces de contact qui entrent en engagement d'action avec les surfaces de contact (29) disposées vis-à-vis.

10. Dispositif suivant l'une quelconque des revendications de 7 à 9, caractérisé en ce que les rubans sans fin (8, 9) sont disposés sur les disques dentés (18, 19) de manière telle que les moules de calibrage (12) occupent une position mutuellement décalée, où l'interstice entre deux moules de calibrage (12) disposés côte à côte est recouvert par un moule de calibrage (12) disposés vis-à-vis.

11. Dispositif suivant l'une quelconque des revendications de 1 à 10, caractérisé en ce qu'aux points d'inversion(16) du ruban sans fin, l'extrémité d'évacuation du tube d'alimentation de chair (4) s'engage dans la région du moyen d'entraînement tubulaire (13).

12. Dispositif suivant l'une quelconque des revendications de 1 à 11, caractérisé en ce que le moyen d'entraînement tubulaire (13) constitué par les moules de calibrage (12) s'éloigne de l'ouverture d'évacuation du tube d'alimentation de chair (4) à une vitesse qui est supérieure à la vitesse d'évacuation de chair du tube d'alimentation de chair (4).

13. Dispositif suivant l'une quelconque des revendications de 1 à 12, caractérisé en ce que le diamètre intérieur du moyen d'entraînement tubulaire (13) est choisi de manière telle que lors du remplissage de la chair dans le boyau (48), une action de serrage est exercée sur le boyau rempli au sein du moyen d'entraînement tubulaire (13).
